# EUROPÄISCHE PATENTSCHRIFT

(11) **EP 2 575 585 B1**
(45) Veröffentlichungstag und Bekanntmachung des Hinweises auf die Patenterteilung: **25.12.2013**
(21) Anmeldenummer: 10721512.1
(22) Anmeldetag: 31.05.2010
(51) Int. Cl.: A47L 9/20, B01D 46/00, F16K 31/08

(54) **STAUBSAUGER MIT FREMDLUFTVENTIL ZUR FILTERABREINIGUNG**
VACUUM CLEANER HAVING AN EXTERNAL-AIR VALVE FOR FILTER CLEANING
ASPIRATEUR À SOUPAPE D'AIR EXTÉRIEUR POUR LE NETTOYAGE DU FILTRE

(43) Veröffentlichungstag der Anmeldung: 10.04.2013
(73) Patentinhaber: Alfred Kärcher GmbH & Co. KG, 71364 Winnenden (DE)
(72) Erfinder: ZERRER, Thomas, 73663 Berglen (DE); JANZEN, Jacob, 71522 Backnang (DE); MÜLLER, Michael, 74532 Ilshofen (DE); STEWEN, Christian, 71672 Marbach (DE); MATH, Jochen, 71522 Backnang (DE); ZENGER, Sabine, 71397 Leutenbach (DE)
(74) Vertreter: Hoeger, Stellrecht & Partner Patentanwälte
(86) Internationale Anmeldenummer: PCT/EP2010/057557
(87) Internationale Veröffentlichungsnummer: WO 2011/150957

(56) Entgegenhaltungen:
- EP-A1- 0 955 003
- WO-A1-2008/014795
- WO-A2-2004/100746
- DE-A1- 3 016 641

## Beschreibung

Die Erfindung betrifft einen Staubsauger mit einem Schmutzsammelbehälter, der einen Saugeinlass aufweist und über mindestens ein Filter und eine Absaugleitung mit einem Saugaggregat in Strömungsverbindung steht, und mit einem stromabwärts des Filters in die Absaugleitung einmündenden Fremdlufteinlass, der mittels eines Fremdluftventils verschließbar ist, wobei ein Schließkörper des Fremdluftventils mittels einer Magnethalterung in einer den Fremdlufteinlass verschließenden Schließstellung gehalten ist und gegen die Wirkung der Magnethalterung in eine den Fremdlufteinlass freigebende Freigabestellung bewegbar ist.

Mit Hilfe eines derartigen Staubsaugers kann Schmutz und vorzugsweise auch Flüssigkeit aufgesaugt werden, indem man den Schmutzsammelbehälter mittels des Saugaggregats mit Unterdruck beaufschlagt, so dass sich eine Saugströmung ausbildet und Schmutz sowie Flüssigkeit über den Saugeinlass in den Schmutzsammelbehälter eingesaugt werden können. Der Staubsauger weist mindestens ein Filter auf, das im Strömungsweg zwischen dem Schmutzsammelbehälter und dem Saugaggregat angeordnet ist. An der dem Schmutzsammelbehälter zugewandten Seite des mindestens einen Filters lagern sich während des Saugbetriebs des Staubsaugers zunehmend Schmutzteilchen ab. Es ist deshalb erforderlich, das mindestens eine Filter nach einiger Zeit abzureinigen, da ansonsten die vom Saugaggregat erzeugte Saugströmung im Bereich des Filters einen zunehmenden Druckverlust erfährt, so dass ein wirkungsvoller Saugbetrieb des Staubsaugers nicht mehr gewährleistet ist.

Zur Abreinigung des mindestens einen Filters kann die dem Schmutzsammelbehälter zugewandte Seite des Filters mit Fremdluft beaufschlagt werden. Hierzu mündet stromabwärts des mindestens einen Filters in die Absaugleitung ein Fremdlufteinlass, der mittels eines Fremdluftventils verschließbar ist. Während des normalen Saugbetriebs des Staubsaugers ist das Fremdluftventil geschlossen, indem der Schließkörper mittels der Magnethalterung in seiner Schließstellung gehalten ist. Die Magnethalterung bildet hierbei eine magnetische Haltevorrichtung, d. h. eine Haltevorrichtung, bei der ein Magnet zum Einsatz kommt. Wird das Fremdluftventil geöffnet, so kann Fremdluft in die Absaugleitung einströmen und die dem Schmutzsammelbehälter abgewandte Seite des mindestens einen Filters beaufschlagen. Dadurch wird das Filter mechanisch erschüttert. Zumindest ein Teil der einströmenden Fremdluft kann das mindestens eine Filter in Gegenstromrichtung, das heißt entgegen der Richtung der während des normalen Saugbetriebs vorherrschenden Saugströmung, durchströmen, so dass am Filter anhaftende Schmutzteilchen nicht nur durch die von der Fremdluft bewirkte mechanische Erschütterung abgelöst werden sondern auch unmittelbar durch die das Filter in Gegenstromrichtung durchströmende Fremdluft.

Ein Staubsauger der eingangs genannten Art ist in der Gebrauchsmusterschrift DE 298 23 411 U1 und in der europäischen Offenlegungsschrift EP 0 955 003 A1 beschrieben. Darin wird vorgeschlagen, zur Abreinigung des Filters einen Saugschlauch, der an den Saugeinlass des Schmutzsammelbehälters angeschlossen ist, kurzzeitig zu verschließen, so dass sich aufgrund der Wirkung des Saugaggregats im Schmutzsammelbehälter und in der Absaugleitung ein starker Unterdruck ausbildet. Der starke Unterdruck hat zur Folge, dass der Schließkörper des Fremdluftventils mit einem zunehmenden Differenzdruck beaufschlagt wird. Die daraus resultierende Druckkraft kann die von der Magnethalterung ausgeübte Haltekraft übersteigen, so dass der Schließkörper von seiner Schließstellung in seine Freigabestellung übergeht und dadurch Fremdluft in die Absaugleitung einströmen und das Filter beaufschlagen kann. Somit kann der Benutzer eine Abreinigung des mindestens einen Filters bewirken, indem er den Saugschlauch beispielsweise mit der Hand verschließt. Allerdings kann eine Abreinigung auch unbeabsichtigt in Gang gesetzt werden, indem die Saugströmung am freien Ende des Saugschlauches, beispielsweise beim Absaugen eines hochflorigen Teppichs, beeinträchtigt wird.

Aus der WO 97/19630 A1 ist ein Staubsauger bekannt, bei dem am Saugeinlass ein Einlassventil angeordnet ist, das über eine Ventilkopplungseinheit mit dem Fremdluftventil gekoppelt ist. Das Fremdluftventil weist einen Schließkörper auf, der von einer Feder in einer Schließstellung gehalten wird und der vom Benutzer manuell in eine Freigabestellung überführt werden kann, wobei über die Ventilkopplungseinheit auch das Einlassventil geschlossen wird. Zusammen mit dem Einlassventil wird auch ein in Strömungsrichtung zwischen dem Filter und dem Saugaggregat angeordnetes Auslassventil geschlossen.

Aus der WO 2008/014795 A1 ist ein Staubsauger bekannt, bei dem die Filterabreinigung nicht vom Benutzer aktiviert werden muss sondern selbsttätig erfolgt. Hierzu umfasst die Magnethalterung, mit der der Schließkörper in seiner Schließstellung gehalten wird, einen Elektromagneten, dessen Erregerstrom von einer Steuereinheit des Staubsaugers in zeitlichen Abständen für kurze Zeit ausgeschaltet wird. Mit dem Ausschalten des Erregerstroms entfällt die magnetische Haltekraft, so dass dann der Schließkörper des Fremdluftventils aufgrund des auf ihn einwirkenden Differenzdruckes für kurze Zeit in seine Freigabestellung übergeht und Fremdluft in die Absaugleitung einströmen kann. Damit die Filterabreinigung möglichst wirkungsvoll erfolgt, wird in der WO 2008/014795 A1 vorgeschlagen, die Ausschaltdauer des Erregerstroms an die Dauer der Bewegung des Schließkörpers anzupassen, die dieser unter der Wirkung einer federelastischen Rückstelleinrichtung ausgehend von seiner Schließstellung über seine Freigabestellung zurück in die Schließstellung durchführt. Dies erfordert allerdings eine sorgfältige Abstimmung der Ausschaltdauer des Erregerstroms unter Berücksichtigung der von der federelastischen Rückstelleinrichtung ausgeübten Rückstellkraft und der von der Magnethalterung ausgeübten magnetischen Haltekraft.

Aufgabe der vorliegenden Erfindung ist es, einen Staubsauger der eingangs genannten Art derart weiterzubilden, dass er auf konstruktiv einfache Weise eine wirkungsvolle Abreinigung des Filters ermöglicht, wobei der Nutzer eine Filterabreinigung komfortabel initiieren kann.

Diese Aufgabe wird durch einen Staubsauger mit den Merkmalen von Patentanspruch 1 gelöst.

Beim erfindungsgemäßen Staubsauger wird der Schließkörper während des normalen Saugbetriebs von der Magnethalterung in seiner Schließstellung gehalten. Die Magnethalterung übt auf den Schließkörper eine magnetische Haltekraft aus, die größer ist als die Druckkraft, die der Schließkörper während des normalen Saugbetriebs aufgrund der auf ihn einwirkenden Druckdifferenz erfährt. Soll eine Filterabreinigung erfolgen, so kann der Schließkörper in seiner Schließstellung mit Hilfe einer Öffnungseinrichtung mit einer Öffnungskraft beaufschlagt werden. Dies hat zur Folge, dass die magnetische Haltekraft nicht mehr ausreicht, um den Ventilkörper in seiner Schließstellung zu halten, vielmehr geht der Schließkörper unter der kombinierten Wirkung der Öffnungskraft und der auf ihn einwirkenden Druckkraft schlagartig in seine Freigabestellung über, so dass innerhalb kurzer Zeit Fremdluft in die Absaugleitung einströmen und das mindestens eine Filter abreinigen kann. Unter der Wirkung der Öffnungskraft kann der Schließkörper sehr stark beschleunigt werden, so dass die Öffnungsbewegung innerhalb sehr kurzer Zeit erfolgt. Die einströmende Fremdluft kann daher schlagartig auf das mindestens eine Filter einwirken und dieses mechanisch erschüttern. Dies hat eine besonders wirkungsvolle Abreinigung des Filters zur Folge. Darüber hinaus kann mindestens ein Teil der einströmenden Fremdluft das mindestens eine Filter in Gegenstromrichtung durchströmen und die Abreinigungswirkung verstärken.

Die Öffnungseinrichtung weist ein beweglich gelagertes Schiebeteil auf. Durch Bewegen des Schiebeteils kann der Schließkörper des Fremdluftventils mit einer Öffnungskraft beaufschlagt werden. Außerdem weist die Öffnungseinrichtung ein Betätigungsorgan auf, das aus einem Gehäuse des Staubsaugers herausragt und mit dem Schiebeteil verbunden ist. Das Betätigungsorgan kann beispielsweise in Form eines Schwenkhebels oder einer Wippe oder auch in Form eines Tasters ausgestaltet sein. Das Betätigungsorgan kann vom Benutzer betätigt werden, damit ein Filterabreinigungsvorgang in Gang gesetzt wird.

Besonders vorteilhaft ist es, wenn die Öffnungskraft in die der Schließstellung des Schließkörpers abgewandte Richtung, also in Öffnungsrichtung, gerichtet ist. Somit kann die gesamte einwirkende Öffnungskraft zur Beschleunigung des Schließkörpers herangezogen werden.

Beim erfindungsgemäßen Staubsauger ist die Öffnungseinrichtung manuell betätigbar. Der Benutzer kann also die Öffnungseinrichtung manuell betätigen, falls er eine Filterabreinigung wünscht.

Bevorzugt ist das Schiebeteil vom Benutzer ausgehend von einer Ruhestellung, in der der Schließkörper keine Öffnungskraft erfährt, in eine Arbeitsstellung verschiebbar, in der der Schließkörper mit der Öffnungskraft beaufschlagt wird.

Der Übergang des Schiebeteils von seiner Ruhestellung in seine Arbeitsstellung kann entgegen der Wirkung einer Feder erfolgen. Dies hat den Vorteil, dass das Schiebeteil selbsttätig in seine Ruhestellung übergeht, wenn es vom Benutzer freigegeben wird.

Bei einer bevorzugten Ausgestaltung des erfindungsgemäßen Staubsaugers ist das Schiebeteil an einem einen Ventilsitz ausbildenden Ventilkörper des Fremdluftventils verschiebbar gehalten. Der Ventilkörper des Fremdluftventils weist somit eine Doppelfunktion auf. Zum einen bildet er einen Ventilsitz aus, an dem der Schließkörper in seiner Schließstellung dichtend anliegt. Zum anderen dient der Ventilkörper als Halterung für das Schiebeteil der Öffnungseinrichtung.

Günstigerweise umfasst der Ventilkörper ein Führungsteil, das das Schiebeteil und vorzugsweise auch den Schließkörper führt. Die Gefahr, dass das Schiebeteil oder auch der Schließkörper verklemmen, wird dadurch gering gehalten.

Das Führungsteil des Ventilkörpers weist bei einer vorteilhaften Ausführungsform eine Führungshülse auf, an der das Schiebeteil und auch der Schließkörper gleitend anliegen. Die Führungshülse dient somit nicht nur zur Führung des Schiebeteils, so dass dieses möglichst reibungsarm von seiner Ruhestellung in seine Arbeitsstellung gelangen kann, sondern zusätzlich dient das Führungsteil des Ventilkörpers auch als Führung für den Schließkörper des Fremdluftventils, so dass auch dieser eine möglichst reibungsarme Bewegung ausführen kann zum Abreinigen des mindestens einen Filters. Das Führungsteil umfasst hierzu eine Führungshülse, an der das Schiebeteil und der Schließkörper gleitend anliegen.

Wie bereits erläutert, wird der Schließkörper des Fremdluftventils während des normalen Saugbetriebs des Staubsaugers mittels der Magnethalterung in seiner Schließstellung gehalten. Die Magnethalterung weist hierzu einen Magneten auf. Vorteilhafterweise ist der Magnet am Ventilkörper des Fremdluftventils gehalten und von einer Schiebehülse des Schiebeteils der Öffnungseinrichtung umgeben, wobei der Schließkörper des Fremdluftventils von der Schiebehülse mit der Öffnungskraft beaufschlagbar ist. Die Beaufschlagung des Schließkörpers mittels der Schiebehülse hat den Vorteil, dass der Schließkörper flächig oder zumindest linienförmig mit der Öffnungskraft beaufschlagt werden kann. Dies wirkt einem Verklemmen des Schließkörpers entgegen. Die Schiebehülse umgibt den Magneten, der den Schließkörper während des Normalbetriebs des Staubsaugers mit einer magnetischen Haltekraft beaufschlagt. Der Bereich, in dem der Schließkörper mit der Öffnungskraft beaufschlagt wird, ist somit in unmittelbarer Nähe des Bereiches angeordnet, in dem der Schließkörper mit der magnetischen Haltekraft beaufschlagt wird. Die Beaufschlagungsbereiche können sich überlappen, das heißt der Bereich, in dem der Schließkörper mit der Öffnungskraft beaufschlagt wird, kann zumindest teilweise innerhalb des Bereiches angeordnet sein, in dem der Schließkörper mit der magnetischen Haltekraft beaufschlagt wird.

Besonders günstig ist es, wenn der Schließkörper ein dem Magneten zugeordnetes magnetisierbares Element aufweist, das in der Schließstellung des Schließkörpers mit dem Magneten einen Magnetkreis ausbildet und von der Schiebehülse mit der Öffnungskraft beaufschlagbar ist. In der Schließstellung des Schließkörpers bündelt das magnetisierbare Element die magnetischen Feldlinien des Magneten. Nimmt der Schließkörper jedoch einen gewissen Abstand zum Ventilsitz ein, so ist der magnetische Kreis zwischen dem Magneten und den magnetisierbaren Elementen unterbrochen. Der Einsatz des magnetisierbaren Elementes unterstützt eine möglichst kurzzeitige Bewegung des Schließkörpers, denn aufgrund des Einsatzes des magnetisierbaren Elementes wird der Schließkörper nur in unmittelbarer Nähe zum Magneten mit der magnetischen Haltekraft beaufschlagt. Der Schließkörper erfährt somit nur in unmittelbarer Nähe zu seiner Schließstellung eine magnetische Haltekraft, die jedoch im Abstand zur Schließstellung überproportional abnimmt. Somit wirkt nur im unmittelbaren Bereich des Ventilsitzes die magnetische Haltekraft der Öffnungskraft der Öffnungseinrichtung entgegen. Sobald der Schließkörper einen Mindestabstand, der beispielsweise 2 mm betragen kann, überwunden hat, überträgt der Schließkörper praktisch keine Haltekraft mehr und kann von der Öffnungskraft sehr stark beschleunigt werden.

Das magnetisierbare Element ist bevorzugt plattenförmig ausgestaltet.

Günstigerweise ist das magnetisierbare Element aus einem eisenhaltigen Material hergestellt.

Es kann vorgesehen sein, dass der Magnet der Magnethalterung in Form eines Elektromagneten ausgestaltet ist, dessen Erregerstrom bei Betätigung der Öffnungseinrichtung unterbrochen wird. Der Elektromagnet kann hierzu über eine Versorgungsleitung mit einer Stromquelle verbunden sein, wobei in die Versorgungsleitung ein Unterbrecherkontakt geschaltet ist, der von der Öffnungseinrichtung geschaltet werden kann. Betätigt der Benutzer die Öffnungseinrichtung, so wird der Schließkörper mit einer Öffnungskraft beaufschlagt und gleichzeitig wird der Erregerstrom des Elektromagneten unterbrochen, so dass die magnetische Haltekraft entfällt.

Bei einer konstruktiv besonders einfachen Ausgestaltung ist der Magnet der Magnethalterung in Form eines Permanentmagneten ausgebildet. Der Permanentmagnet kann mit dem Ventilkörper des Fremdluftventils lösbar oder unlösbar verbunden sein.

Günstigerweise ragt das Betätigungsorgan aus einer Oberseite des Gehäuses heraus und ist vom Benutzer mit einer vertikal ausgerichteten Betätigungskraft beaufschlagbar. Dies vereinfacht die Handhabung des Staubsaugers, da der Benutzer zur Filterabreinigung von oben auf das Betätigungsorgan drücken kann, um über das Betätigungsorgan eine Öffnungskraft auf den Schließkörper des Fremdluftventils auszuüben.

Das Betätigungsorgan ist mit dem Schiebeteil verbunden. Vorzugsweise sind Betätigungsorgan und Schiebeteil starr miteinander verbunden. Insbesondere kann vorgesehen sein, dass das Betätigungsorgan und das Schiebeteil stoffschlüssig miteinander verbunden sind.

Bei einer vorteilhaften Ausführungsform ist das Betätigungsorgan einstückig mit dem Schiebeteil verbunden. Betätigungsorgan und Schiebeteil können beispielsweise in Form eines einteiligen Kunststoffteils ausgestaltet sein.

Um sicherzustellen, dass der Schließkörper des Fremdluftventils, nachdem er vom Ventilsitz abgehoben ist, wieder selbsttätig seine Schließstellung einnimmt, ist bei einer vorteilhaften Ausführungsform vorgesehen, dass der Schließkörper in seiner Freigabestellung durch eine Rückstellfeder mit einer Rückstellkraft in Richtung seiner Schließstellung beaufschlagt ist. Die Bewegung des Schließkörpers aus seiner Freigabestellung in seine Schließstellung kann somit unter der Wirkung der Rückstellfeder erfolgen.

Von besonderem Vorteil ist es, wenn die Rückstellfeder den Schließkörper in seiner Schließstellung allenfalls mit einer Federkraft beaufschlagt, die kleiner ist als die von der Magnethalterung ausgeübte magnetische Haltekraft. Zum Öffnen des Fremdluftventils muss der Schließkörper von seiner Schließstellung in Richtung seiner Freigabestellung bewegt werden. Hierzu müssen die magnetische Haltekraft und die gegebenenfalls einwirkende Rückstellkraft von der Öffnungskraft überwunden werden. Je kleiner die Rückstellkraft ist, desto einfacher ist es, das Fremdluftventil zu öffnen. Es ist deshalb von Vorteil, wenn die von der Rückstellfeder in der Schließstellung auf den Schließkörper ausgeübte Rückstellkraft möglichst gering ist. Erst wenn der Schließkörper einen Abstand zum Ventilsitz einnimmt, erfährt der Ventilkörper eine zunehmende Rückstellkraft, die ihn dann wieder in seine Schließstellung zurückführt.

Bevorzugt ist die Rückstellfeder in der Schließstellung des Schließkörpers entspannt. Bei einer derartigen Ausgestaltung übt die Rückstellfeder in der Schließstellung praktisch gar keine Rückstellkraft auf den Schließkörper aus. Erst wenn der Schließkörper vom Ventilsitz abhebt, wird die Rückstellfeder zusammengedrückt und übt dann eine zunehmende Rückstellkraft auf den Schließkörper aus. Das Öffnen des Fremdluftventils gestaltet sich daher besonders einfach.

Die nachfolgende Beschreibung einer bevorzugten Ausführungsform der Erfindung dient im Zusammenhang mit der Zeichnung der näheren Erläuterung. Es zeigen:

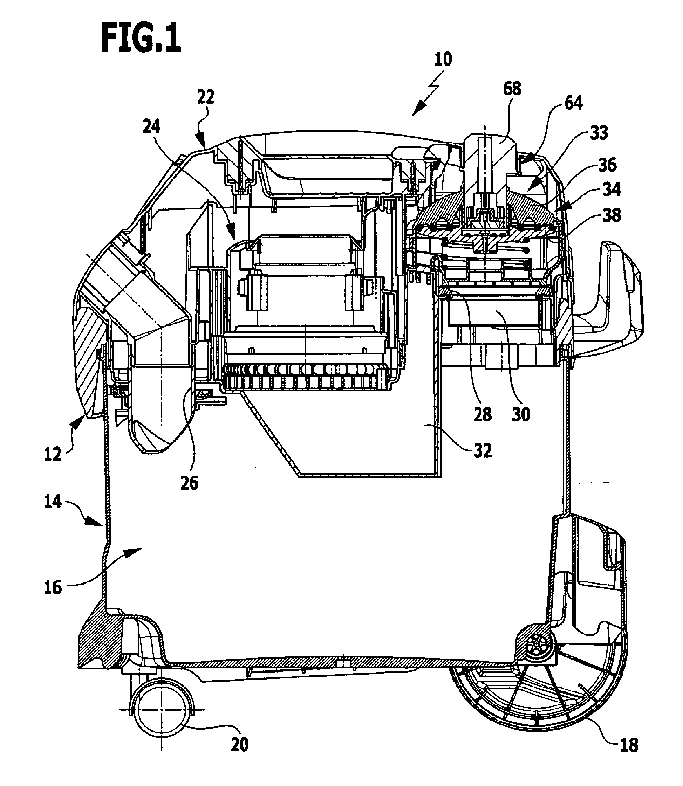

- Figur 1:: eine schematische Schnittansicht eines erfindungsgemäßen Staubsaugers; und
- Figur 2:: eine vergrößerte Darstellung einer Filterabreinigungseinrichtung des Staubsaugers aus Figur 1.

In der Zeichnung ist schematisch ein Staubsauger 10 dargestellt mit einem zweiteiligen Gehäuse 12, dessen Unterteil 14 einen Schmutzsammelbehälter 16 ausbildet und mit Hilfe von Laufrädern 18 und Schwenkrollen 20 verfahrbar ist, und dessen Oberteil 22 auf das Unterteil 14 aufsetzbar ist und ein Saugaggregat 24 aufnimmt. Der Schmutzsammelbehälter 16 umfasst einen Saugeinlass 26, an den ein üblicher, in der Zeichnung nicht dargestellter Saugschlauch anschließbar ist. An seinem freien Ende kann der Saugschlauch eine Saugdüse tragen, die an einer abzusaugenden Fläche, beispielsweise einer Bodenfläche, entlang geführt werden kann. Alternativ kann vorgesehen sein, dass der Saugschlauch an ein Bearbeitungswerkzeug, beispielsweise ein Bohraggregat oder ein Fräsaggregat, angeschlossen wird, so dass Staub, der während des Betriebs des Bearbeitungswerkzeugs anfällt, abgesaugt werden kann.

Das Oberteil 22 bildet einen Saugauslass 28 für den Schmutzsammelbehälter 16 aus. Am Saugauslass 28 ist ein Filter 30, in der dargestellten Ausführungsform ein Faltenfilter, gehalten, an das sich eine Absaugleitung 32 anschließt, über die das Filter 30 permanent mit dem Saugaggregat 24 in Strömungsverbindung steht.

Der Schmutzsammelbehälter 16 kann über die Absaugleitung 32 und das Filter 30 vom Saugaggregat 24 mit Unterdruck beaufschlagt werden, so dass sich eine Saugströmung ausbildet, unter deren Wirkung Schmutz und gegebenenfalls auch Flüssigkeit in den Schmutzsammelbehälter 16 eingesaugt werden können. Mittels des Filters 30 können die Schmutzteilchen aus der Saugströmung abgeschieden werden.

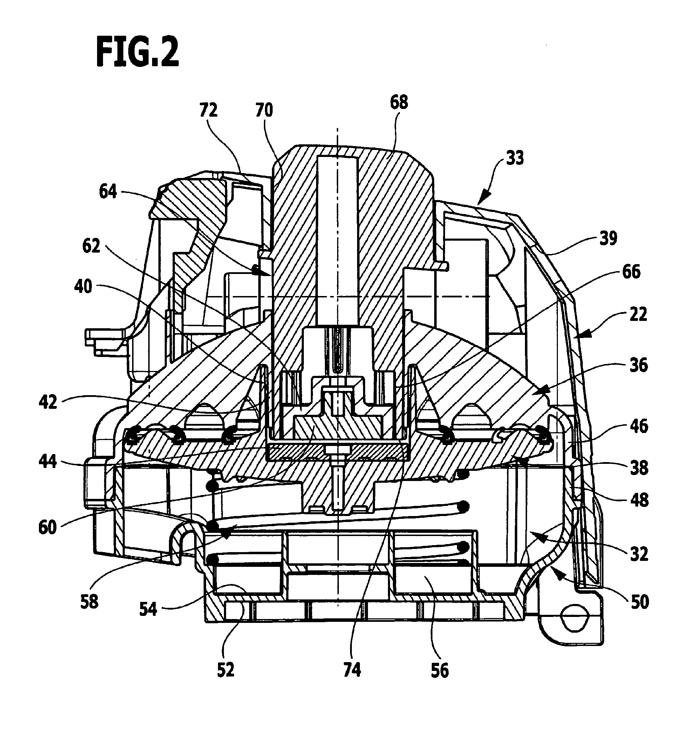

Oberhalb des Filters 30 ist im Oberteil 22 des Gehäuses 12 eine Filterabreinigungseinrichtung 33 angeordnet, die in Figur 2 vergrößert dargestellt ist. Sie umfasst ein Fremdluftventil 34 mit einem im Oberteil 22 gehaltenen Ventilkörper 36, der einen Ventilsitz ausbildet, und mit einem beweglichen Schließkörper in Form eines kreisrunden Ventiltellers 38. Das Gehäuse 12 des Staubsaugers weist oberhalb des Ventilkörpers 36 eine Öffnung 39 auf, über die Fremdluft eindringen kann. Liegt der Ventilteller 38 direkt am Ventilsitz des Ventilkörpers 36 an, so kann die Fremdluft allerdings nicht in die Absaugleitung 32 einströmen.

An den Ventilteller 38 ist eine Außenhülse 40 angeformt, die eine zentrale Führungshülse 42 des Ventilkörpers 36 aufnimmt. Die Außenhülse 40 liegt an der Außenseite der zentralen Führungshülse 42 gleitend an. In die Außenhülse 40 des Ventiltellers 38 ist ein magnetisierbares Element in Form einer Eisenplatte 44 eingesetzt.

Der Ventilkörper 38 weist an seinem Außenrand einen koaxial zur zentralen Führungshülse 42 ausgerichteten Ringkragen 46 auf, der sich stufig erweitert. In den Ringkragen 46 ist eine ringförmige Außenwand 48 einer Federhalterung 50 eingesetzt, die den sich an das Filter 30 anschließenden Bereich der Absaugleitung 32 definiert. An der dem Ventilkörper 36 abgewandten Unterseite 52 der Federhalterung 50 ist der Saugauslass 28 angeordnet, an dem das Filter 30 gehalten ist. An der dem Ventilkörper 36 zugewandten Oberseite 54 der Federhalterung 50 sind Halterippen 56 angeordnet, an denen sich eine schraubenlinienförmige Rückstellfeder 58 abstützt, die zwischen der Federhalterung 50 und dem Ventilteller 38 angeordnet ist.

Der Ventilkörper 36 weist innerhalb der zentralen Führungshülse 42 einen Permanentmagneten 60 auf, der in einem zentralen Halteteil 62 festgelegt ist.

Während des normalen Saugbetriebs des Staubsaugers 10 wird vom Permanentmagneten 60 auf die Eisenplatte 44 des Ventiltellers 38 eine magnetische Haltekraft ausgeübt, unter deren Wirkung der Ventilteller 38 in seiner in der Zeichnung dargestellten Schließstellung gehalten wird, in der er dichtend am Ventilsitz des Ventilkörpers 36 anliegt und dadurch das Eindringen von Fremdluft in die Absaugleitung 32 verhindert.

Mit Hilfe einer Öffnungseinrichtung 64 kann auf den Ventilteller 38 in seiner Schließstellung eine Öffnungskraft ausgeübt werden, die in Öffnungsrichtung des Ventiltellers 38, also vertikal nach unten in Richtung der Federhalterung 50, ausgerichtet ist. Die Öffnungseinrichtung 64 weist ein Schiebeteil in Form einer Schiebehülse 66 auf, die die zentrale Führungshülse 42 des Ventilkörpers 36 durchgreift und an der Innenseite der zentralen Führungshülse 42 gleitend anliegt. An die Schiebehülse 66 schließt sich in die der Federhalterung 50 abgewandte Richtung nach oben einstückig ein Betätigungsorgan in Form einer Taste 68 an, die einen Gehäusedurchbruch 70 an der Oberseite 72 des Gehäuses 12 durchgreift und somit oberseitig aus dem Gehäuse 12 des Staubsaugers 10 herausragt.

Der Benutzer kann die Taste 68 mit einer vertikal nach unten, das heißt in Richtung des Ventiltellers 38 ausgerichteten Betätigungskraft beaufschlagen. Dies hat zur Folge, dass die Stirnseite 74 der Schiebehülse 66 die Eisenplatte 44 mit einer vertikal nach unten, das heißt in Öffnungsrichtung des Ventiltellers 38 gerichteten Öffnungskraft beaufschlagt. Unter der Wirkung der vom Benutzer über die Taste 68 und die Schiebehülse 66 auf den Ventilteller 38 ausgeübten Öffnungskraft hebt der Ventilteller 38 vom Ventilsitz des Ventilkörpers 36 ab und gibt dadurch den Fremdlufteinlass frei. Dies hat zur Folge, dass schlagartig Fremdluft in die Absaugleitung 32 einströmen und das Filter 30 beaufschlagen kann. Das Filter 30 wird dadurch mechanisch in Erschütterung gesetzt und zumindest ein Teil der einströmenden Fremdluft durchströmt das Filter in Gegenstromrichtung, das heißt dass entgegen der Richtung der während des normalen Saugbetriebes vorherrschenden Saugströmung Schmutzteilchen, die an der dem Schmutzsammelbehälter 16 zugewandten Seite des Filters 30 anhaften, werden dadurch wirkungsvoll abgelöst.

Sobald der Benutzer die Taste 68 wieder freigibt, entfällt die auf den Ventilteller 38 einwirkende Öffnungskraft. Dadurch kann die Rückstellfeder 58 den Ventilteller 38 in seine Schließstellung zurückführen, in der er unter der Wirkung der vom Permanentmagneten 60 auf die Eisenplatte 44 ausgeübten Haltekraft am Ventilsitz dicht anliegt und dadurch den Fremdlufteinlass dicht verschließt. Ein weiteres Eindringen von Fremdluft in die Absaugleitung 32 wird dadurch unterbunden.

Während des normalen Saugbetriebs herrscht innerhalb der Absaugleitung 32 ein Unterdruck vor, wohingegen oberhalb des Fremdluftventils 34 aufgrund der Öffnung 39 Atmosphärendruck herrscht. Auf den Ventilteller 38 wirkt somit während des normalen Saugbetriebs des Staubsaugers 10 ein Differenzdruck ein, der eine Druckkraft in Öffnungsrichtung zur Folge hat. Dieser Druckkraft wirkt die magnetische Haltekraft entgegen, die vom Permanentmagneten 60 auf die Eisenplatte 44 ausgeübt wird. Der Permanentmagnet 60 bildet in Kombination mit der Eisenplatte 44 eine Magnethalterung des Fremdluftventils 34 aus, und die Magnethalterung bewirkt eine auf den Ventilteller 38 einwirkende Haltekraft, die der aus dem Differenzdruck resultierenden Druckkraft entgegenwirkt und den Ventilteller 30 zuverlässig in seiner Schließstellung hält.

Die zwischen der Federhalterung 50 und dem Ventilteller 38 angeordnete Rückstellfeder 58 ist derart bemessen, dass sie in der Schließstellung des Ventiltellers 38 entspannt ist und daher den Ventilteller 38 nur dann mit einer elastischen Rückstellkraft beaufschlagt, wenn der Ventilteller 38 vom Ventilsitz abhebt. Dies ist dann der Fall, wenn der Benutzer die Taste 68 betätigt und eine Öffnungskraft auf den Ventilteller 38 ausübt. Die Öffnungskraft muss daher zunächst nur die magnetische Haltekraft der Magnethalterung überwinden, um den Ventilteller 38 in Öffnungsrichtung zu beschleunigen. Mit zunehmendem Abstand vom Ventilsitz übt dann die Rückstellfeder 58 eine zunehmende Rückstellkraft auf den Ventilteller 38 aus, so dass dieser von seiner Freigabestellung wieder in seine Schließstellung zurückgeführt wird, sobald der Benutzer die Taste 68 freigibt.

Eine Filterabreinigung kann somit vom Benutzer auf einfache Weise durch Betätigen der Taste 68 ausgelöst werden. Es ist nicht erforderlich, dass der Benutzer den Saugschlauch oder eine am freien Ende des Saugschlauchs angeordnete Saugdüse verschließt, um eine Filterabreinigung auszulösen. Auch eine elektrische Steuereinrichtung zum Auslösen eines Filterabreinigungsvorgangs ist beim erfindungsgemäßen Staubsauger nicht zwingend erforderlich. Die Filterabreinigung ist äußerst wirkungsvoll, da die Fremdluft schlagartig in die Absaugleitung 32 eindringen und den Ventilteller 38 beaufschlagen kann.

## Patentansprüche

1. Staubsauger mit einem Schmutzsammelbehälter (16), der einen Saugeinlass (26) aufweist und über mindestens ein Filter (30) und eine Absaugleitung (32) mit einem Saugaggregat (24) in Strömungsverbindung steht, und mit einem stromabwärts des Filters (30) in die Absaugleitung (32) einmündenden Fremdlufteinlass, der mittels eines Fremdluftventils (34) verschließbar ist, wobei ein Schließkörper (38) des Fremdluftventils (34) mittels einer Magnethalterung (44, 60) in einer den Fremdlufteinlass verschließenden Schließstellung gehalten ist und gegen die Wirkung der Magnethalterung (44, 60) in eine den Fremdlufteinlass freigebende Freigabestellung bewegbar ist, wobei der Schließkörper (38) in seiner Schließstellung mittels einer Öffnungseinrichtung (64) mit einer Öffnungskraft beaufschlagbar ist, **dadurch gekennzeichnet, dass** die Öffnungseinrichtung (64) ein beweglich gelagertes Schiebeteil (66) aufweist sowie ein Betätigungsorgan (68), das aus einem Gehäuse (12) des Staubsaugers (10) herausragt und mit dem Schiebeteil (66) verbunden ist.

2. Staubsauger nach Anspruch 1, **dadurch gekennzeichnet, dass** die Öffnungskraft in die der Schließstellung des Schließkörpers (38) abgewandte Richtung gerichtet ist.

3. Staubsauger nach einem der voranstehenden Ansprüche, **dadurch gekennzeichnet, dass** das Schiebeteil (66) an einem einen Ventilsitz ausbildenden Ventilkörper (36) des Fremdluftventils (34) verschiebbar gehalten ist.

4. Staubsauger nach einem der voranstehenden Ansprüche, **dadurch gekennzeichnet, dass** das Fremdluftventil (34) einen Ventilkörper (36) aufweist, der einen Ventilsitz ausbildet und ein das Schiebeteil (66) sowie den Schließkörper (38) führendes Führungsteil (42) umfasst.

5. Staubsauger nach Anspruch 4, **dadurch gekennzeichnet, dass** das Führungsteil eine Führungshülse (42) aufweist, an der das Schiebeteil (66) und der Schließkörper (38) gleitend anliegen.

6. Staubsauger nach einem der voranstehenden Ansprüche, **dadurch gekennzeichnet, dass** die Magnethalterung einen Magneten (60) aufweist, der an einem Ventilkörper (36) des Fremdluftventils (34) gehalten ist, und dass das Schiebeteil eine den Magneten (60) umgebende Schiebehülse (66) aufweist, wobei der Schließkörper (38) von der Schiebehülse (66) mit der Öffnungskraft beaufschlagbar ist.

7. Staubsauger nach Anspruch 6, **dadurch gekennzeichnet, dass** der Schließkörper (38) ein dem Magneten (60) zugeordnetes magnetisierbares Element (44) aufweist, das in der Schließstellung des Schließkörpers (38) mit dem Magneten (60) einen Magnetkreis bildet und von der Schiebehülse (66) mit der Öffnungskraft beaufschlagbar ist.

8. Staubsauger nach einem der voranstehenden Ansprüche, **dadurch gekennzeichnet, dass** das Betätigungsorgan (68) aus einer Oberseite (72) des Gehäuses (12) herausragt und vom Benutzer mit einer vertikal nach unten gerichteten Betätigungskraft beaufschlagbar ist.

9. Staubsauger nach einem der voranstehenden Ansprüche, **dadurch gekennzeichnet, dass** das Betätigungsorgan (68) und das Schiebeteil (66) starr miteinander verbunden sind.

10. Staubsauger nach einem der voranstehenden Ansprüche, **dadurch gekennzeichnet, dass** der Schließkörper (38) in seiner Freigabestellung durch eine Rückstellfeder (58) mit einer Rückstellkraft in Richtung seiner Schließstellung beaufschlagt ist.

11. Staubsauger nach Anspruch 10, **dadurch gekennzeichnet, dass** die Rückstellfeder (58) den Schließkörper (38) in seiner Schließstellung allenfalls mit einer Federkraft beaufschlagt, die kleiner ist als die von der Magnethalterung (44, 60) ausgeübte magnetische Haltekraft.

12. Staubsauger nach Anspruch 10 oder 11, **dadurch gekennzeichnet, dass** die Rückstellfeder (58) in der Schließstellung des Schließkörpers (38) entspannt ist.

## Claims

1. Vacuum cleaner, comprising a dirt collection container (16) which has a suction inlet (26) and is in flow communication with a suction unit (24) via at least one filter (30) and a suction conduit (32), and comprising an external air inlet which opens into the suction conduit (32) downstream of the filter (30) and is closable by an external air valve (34), wherein a closing body (38) of the external air valve (34) is held by a magnet holder (44, 60) in a closed position in which it closes the external air inlet and is movable against the action of the magnet holder (44, 60) to an open position in which it opens the external air inlet, wherein the closing body (38) in its closed position is capable of having an opening force applied thereto by an opening device (64), **characterized in that** the opening device (64) has a movably mounted sliding part (66) and has an actuating member (68) that protrudes from a housing (12) of the vacuum cleaner (10) and is connected to the sliding part (66).

2. Vacuum cleaner in accordance with claim 1, **characterized in that** the opening force is directed towards the direction facing away from the closed position of the closing body (38).

3. Vacuum cleaner in accordance with any one of the preceding claims, **characterized in that** the sliding part (66) is held for displacement on a valve body (36) of the external air valve (34) which forms a valve seat.

4. Vacuum cleaner in accordance with any one of the preceding claims, **characterized in that** the external air valve (34) has a valve body (36) which forms a valve seat and comprises a guiding part (42) which guides the sliding part (66) and the closing body (38).

5. Vacuum cleaner in accordance with claim 4, **characterized in that** the guiding part has a guiding sleeve (42) with which the sliding part (66) and the closing body (38) are in sliding contact.

6. Vacuum cleaner in accordance with any one of the preceding claims, **characterized in that** the magnet holder has a magnet (60) that is held on a valve body (36) of the external air valve (34) and **in that** the sliding part has a sliding sleeve (66) which surrounds the magnet (60), wherein the closing body (38) is capable of having the opening force applied thereto by way of the sliding sleeve (66).

7. Vacuum cleaner in accordance with claim 6, **characterized in that** the closing body (38) has a magnetizable element (44) which is associated with the magnet (60) and which, when the closing body (38) is in the closed position, forms a magnetic circuit with the magnet (60) and is capable of having the opening force applied thereto by way of the sliding sleeve (66).

8. Vacuum cleaner in accordance with any one of the preceding claims, **characterized in that** the actuating member (68) protrudes from an upper side (72) of the housing (12) and is capable of having a vertically downwardly directed actuating force applied thereto by the user.

9. Vacuum cleaner in accordance with any one of the preceding claims, **characterized in that** the actuating member (68) and the sliding part (66) are rigidly connected together.

10. Vacuum cleaner in accordance with any one of the preceding claims, **characterized in that** the closing body (38) in its open position has applied thereto a restoring force in a direction towards its closed position by way of a restoring spring (58).

11. Vacuum cleaner in accordance with claim 10, **characterized in that** the restoring spring (58) applies to the closing body (38) in its closed position at most a spring force that is smaller than the magnetic holding force exerted by the magnet holder (44, 60).

12. Vacuum cleaner in accordance with claim 10 or 11, **characterized in that** the restoring spring (58) is relaxed when the closing body (38) is in the closed position.

## Revendications

1. Aspirateur comprenant un contenant collecteur de poussières (16) qui présente une entrée d'aspiration (26) et qui est en liaison fluidique, par l'intermédiaire d'au moins un filtre (30) et une conduite d'aspiration (32), avec un organe d'aspiration (24), et comprenant une admission d'air extérieur débouchant, en aval du filtre (30), dans la conduite d'aspiration (32), ladite admission d'air pouvant être fermée au moyen d'une soupape d'air extérieur (34), un corps de fermeture (38) de la soupape d'air extérieur (34) étant maintenu dans une position de fermeture fermant l'admission d'air extérieur au moyen d'un dispositif de retenue magnétique (44, 60), et étant mobile, à l'encontre de l'action du dispositif de retenue magnétique (44, 60), dans une position de libération libérant l'admission d'air extérieur, le corps de fermeture (38), dans sa position de fermeture, étant soumis à l'action d'une force d'ouverture au moyen d'un dispositif d'ouverture (64), **caractérisé en ce que** le dispositif d'ouverture (64) comprend une partie coulissante (66) montée mobile et un organe d'actionnement (68) qui fait saillie d'un boîtier (12) de l'aspirateur (10) et est relié à la partie coulissante (66).

2. Aspirateur selon la revendication 1, **caractérisé en ce que** la force d'ouverture est orientée dans la direction opposée à la position de fermeture du corps de fermeture (38).

3. Aspirateur selon l'une quelconque des revendications précédentes, **caractérisé en ce que** la partie coulissante (66) est retenue en étant mobile contre un corps de soupape (36), formant un siège de soupape, de la soupape d'air extérieur (34).

4. Aspirateur selon l'une quelconque des revendications précédentes, **caractérisé en ce que** la soupape d'air extérieur (34) comprend un corps de soupape (36) qui forme un siège de soupape et qui comporte une partie de guidage (42) guidant la partie coulissante (66) et le corps de fermeture (38).

5. Aspirateur selon la revendication 4, **caractérisé en ce que** la partie de guidage comprend un manchon de guidage (42) contre lequel la partie coulissante (66) et le corps de fermeture (38) reposent de manière coulissante.

6. Aspirateur selon l'une quelconque des revendications précédentes, **caractérisé en ce que** le dispositif de retenue magnétique comprend un aimant (60) qui est retenu contre un corps de soupape (36) de la soupape d'air extérieur (34), et **en ce que** la partie coulissante comprend un manchon coulissant (66) entourant l'aimant (60), le corps de fermeture (38) étant soumis à l'effet d'une force d'ouverture par le manchon coulissant (66).

7. Aspirateur selon la revendication 6, **caractérisé en ce que** le corps de fermeture (38) comprend un élément magnétisable (44) associé à l'aimant (60), lequel élément, dans la position de fermeture du corps de fermeture (38), forme avec l'aimant un circuit magnétique et peut être soumis à l'effet d'une force d'ouverture par le manchon coulissant (66).

8. Aspirateur selon l'une quelconque des revendications précédentes, **caractérisé en ce que** l'organe d'actionnement (68) s'étend en saillie d'une face supérieure (72) du boîtier (12) et peut être soumis par l'utilisateur à l'effet d'une force d'actionnement orientée verticalement vers le bas.

9. Aspirateur selon l'une quelconque des revendications précédentes, **caractérisé en ce que** 1"organe d'actionnement (68) et la partie coulissante (66) sont reliés ensemble rigidement.

10. Aspirateur selon l'une quelconque des revendications précédentes, **caractérisé en ce que** le corps de fermeture (38), dans sa position de libération, est soumis par un ressort de rappel (58) à l'effet d'une force de rappel en direction de sa position de fermeture.

11. Aspirateur selon la revendication 10 **caractérisé en ce que** le ressort de rappel (58) soumet le cas échéant le corps de fermeture (38) dans sa position de fermeture à l'effet d'une force élastique qui est plus faible que la force de retenue magnétique exercée par le dispositif de retenue magnétique (44, 60).

12. Aspirateur selon la revendication 10 ou 11, **caractérisé en ce que** le ressort de rappel (58), dans la position de fermeture du corps de fermeture (38), est détendu.
